# EUROPEAN PATENT SPECIFICATION

(11) **EP 3 163 854 B1**
(45) Date of publication and mention of the grant of the patent: **13.06.2018**
(21) Application number: 16158290.3
(22) Date of filing: 02.03.2016
(51) Int. Cl.: H04M 1/725, H04M 19/04

(54) **REDUCED NOTIFICATIONS FOR SAME PUSH MESSAGES**
REDUZIERTE BENACHRICHTIGUNGEN VON GLEICHEN PUSH-NACHRICHTEN
RÉDUIT NOTIFICATIONS DES MESSAGERIE PUSH IDENTIQUES

(30) Priority: 29.10.2015 CN 201510717548
(43) Date of publication of application: 03.05.2017
(73) Proprietor: Xiaomi Inc., Beijing 100085 (CN)
(72) Inventor: LIU, Meilan, 100085 Haidian District (CN); GAO, Ziguang, 100085 Haidian District (CN); HOU, Enxing, 100085 Haidian District (CN)
(74) Representative: Sadler, Peter Frederick

(56) References cited:
- US-A1- 2008 220 752
- US-A1- 2013 346 521
- US-A1- 2014 335 827

## Description

### FIELD

The present disclosure generally relates to the field of information technology, and more particularly to a method and device for information processing.

### BACKGROUND

With the increasing development of technology, types and numbers of smart terminals are increasing continuously. Smart devices, such as smart bulbs, smart cameras, smart air cleaners and smart purifying curtains in addition to smart telephones usually used by a user, generally can be bound to a smart telephone of the user and push information to the smart telephone.

However, the content pushed by the smart device to the smart telephone is the same most of time. If the smart device pushes information to the smart telephone too frequently, the user may be disturbed by a vibration or prompt sound generated when the information is received by the smart telephone, and normal life and work of the user may be affected to a great extent.

US patent application US 2008/220752 describes a method, performed at a portable multifunction device with a display that includes: receiving a plurality of communications via a plurality of communication modalities while the device is in a locked state; and detecting an unlock interaction by the user with the device. In response to detecting the unlock interaction, the method further includes unlocking the device and presenting a communication, or information about the communication, in the plurality of communications that was received while the device was in the locked state. The presented communication or information is presented in accordance with the corresponding communication modality.

### SUMMARY

In view of the related art, a method and device for information processing are provided in the disclosure.

According to a first aspect of the present disclosure, a method for information processing in a terminal having a screen operable to display a notification bar is provided, including: determining, when current first push information is received, from a smart device for example, whether previously received second target push information having the same content as that of the first push information has been in the notification bar; updating a push time corresponding to the second push information in the notification bar to the push time of the current first push information in response to determining that the second push information has been in the notification bar. The push time indicates the time of receipt of the corresponding push information, or the time of sending the corresponding push information from the smart device.

A mobile terminal, when receiving the push information, will compare the push information with the target push information in the notification bar. If there is the target push information with same content as that of the push information, the push time corresponding to the target push information in the notification bar is updated to the push time of the push information to facilitate the user's view, without prompting the user at this point, and impacts to the user's normal life and work therefore can be avoided. In addition, the push information in the notification bar does not need to be updated until the received information actually changes.

The method further includes performing a prompt in a preset manner only when criteria of either a first or a second option are met. According to the first option a prompt is performed to alert a user when the push time of the target push information in the notification bar has been updated more than a preset number of times. The preset number of times is optionally two or more times.

As such, if the push time of the target push information in the notification bar has been updated more than a preset number of times, it may be indicated that the push information may be very important and a timely prompt is needed to prompt the user to view.

According to the second option, performing the prompt includes: extracting characteristic information of information content of the first push information; estimating a level of importance for the push information based on the characteristic information; and performing a prompt in a preset manner to alert a user when the level of importance is greater than or equal to a preset level.

If a priority of information of the push information is greater than or equal to the preset priority level, it may be indicated that the push information is very important and a timely prompt for the push information is needed, such that the user can take actions quickly when viewing the push information based on the prompt to avoid loss.

Optionally, the method may further include: when repeated push information is not received within a preset period of time before the time of receiving the push information, performing a prompt for the push information to alert a user.

If no repeated push information is received within the preset period of time before the time of receiving, it may be indicated that the mobile terminal receives the push information for the first time within the preset period of time and performing a prompt for the push information is needed.

The performing a prompt for the push information includes at least one of: playing a preset audio by a speaker of the mobile terminal; or generating a vibration by the mobile terminal; or displaying a pop-up box on a main interface.

The above features of the method may be combined according to a practical need to perform a prompt to quickly and effectively prompt the user.

Optionally, the method may further include: adding the content of the first push information and the push time of the first push information to the notification bar in response to determining that the second push information has not been in the notification bar.

Optionally, the target push information determined by the determination module and the current received push information may correspond to a same application program.

According to a further aspect of the present disclosure, a terminal is provided, including: a processor; a memory for storing instructions executable by the processor; wherein the processor is configured, by virtue of the stored instructions, to: carry out any of the methods described herein.

The technical solutions provided by the embodiments of the disclosure may provide the following beneficial effects.

In the method and device for information processing provided in the disclosure, when receiving push information sent by a bound device, a mobile terminal will compare the received push information with pre-existing target push information in a notification bar. If the target push information has the same content as that of the received push information, the push time corresponding to the target push information in the notification bar can be updated to the push time of the received push information to facilitate the user's view, without prompting the user at this point. Impacts caused by disruptions to the user's normal life and work therefore can be avoided.

Furthermore, in the method and device for information processing provided in the disclosure, whether it is needed to prompt the user with the mobile terminal can be determined based on times of reception of repeated push information and a priority of the push information, thus unnecessary disturbance to the user's work and life can be avoided.

It is to be understood that both the forgoing general description and the following detailed description are exemplary only, and will not limit the present disclosure.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a schematic diagram illustrating an application scenario according to an embodiment.
Fig. 2 is a flow diagram illustrating a method for information processing according to an exemplary embodiment.
Fig. 3 is a schematic diagram illustrating an application scenario according to an exemplary embodiment.
Fig. 4 is a flow diagram illustrating a method for information processing according to an exemplary embodiment.
Fig. 5 is a flow diagram illustrating a method for information processing according to an exemplary embodiment.
Fig. 6 is a flow diagram illustrating a method for information processing according to an exemplary embodiment.
Fig. 7 is a flow diagram illustrating a method for information processing according to an exemplary embodiment.
Fig. 8 is a schematic diagram illustrating a device for information processing according to an exemplary embodiment.
Fig. 9 is a schematic diagram illustrating a device for information processing according to an exemplary embodiment.
Fig. 10 is a schematic diagram illustrating a device for information processing according to an exemplary embodiment.
Fig. 11 is a schematic diagram of the first prompt module of Fig. 9.
Fig. 12 is a schematic diagram of the second prompt module of Fig. 10.
Fig. 13 is a schematic diagram illustrating a device for information processing according to an exemplary embodiment.
Fig. 14 is a structure diagram illustrating a terminal for information processing according to an exemplary embodiment.

### DETAILED DESCRIPTION

Exemplary embodiments are described in detail herein, examples of which are illustrated in the accompanying drawings. The following description refers to the accompanying drawings in which the same numbers in different drawings represent the same or similar elements unless otherwise described. The implementations set forth in the following description of exemplary embodiments do not represent all implementations consistent with the invention. Instead, they are merely examples of devices and methods consistent with aspects related to the invention as recited in the appended claims.

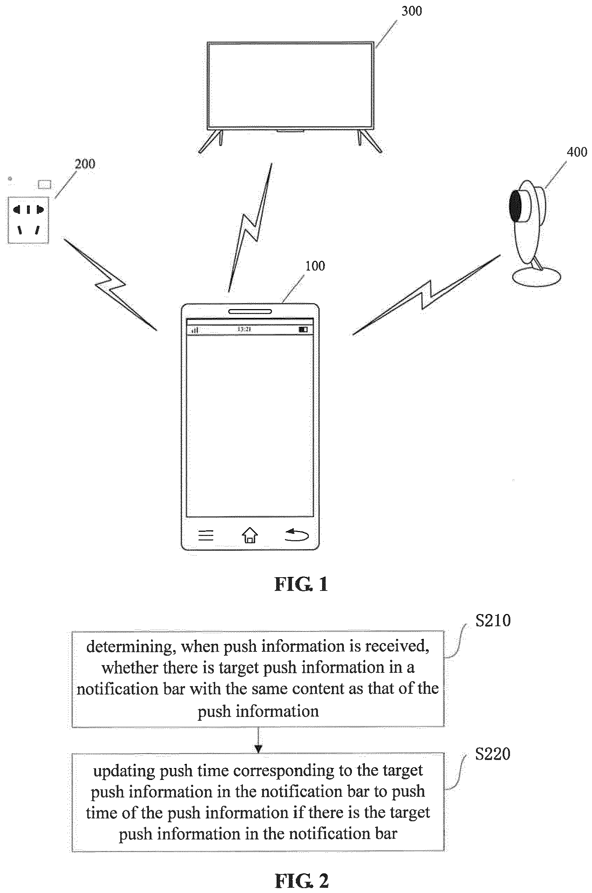

Fig. 1 is a schematic diagram illustrating an application scenario according to an exemplary embodiment. In Fig. 1, the application scenario may include a smart telephone 100, a smart socket 200, a smart TV 300 and a smart camera 400. The smart telephone 100 may communicate with the smart socket 200, the smart TV 300 and the smart camera 400 respectively and the communication may be made via Bluetooth, Infrared or wireless networks, and the like.

The smart socket 200, the smart TV 300 and the smart camera 400 may generate push information on their operating state or detected data and send the push information to the smart telephone 100. A user may be aware of the operating state of the smart terminals bound to the smart telephone 100 by viewing the push information received by the smart telephone 100 to take effective actions.

For example, when the smart socket 200 detects that a power consumption of an electrical appliance connected with the smart socket 200 exceeds a rated power, it will send push information to the smart telephone 100 to prompt the user to decrease the power consumption of the related electrical appliance or turn off the related electrical appliance to avoid harmful cases such as burning up the electrical appliance. As another example, when the smart camera 400 detects a movement of somebody, it will also send push information to the smart telephone 100 to enable the user to take actions to avoid burglary and the like.

However, when the smart telephone 100 receives the push information sent by a smart device bound thereto too frequently, the user will be disturbed by the prompt generated by the push information that is received by the smart telephone 100, and this will affect the user's normal work and life. If the user turns off the prompt generated when the push information is received by the smart telephone 100, it is possible to miss important information and the user may suffer a loss.

In the methods for information processing provided in the present disclosure, when the smart telephone 100 receives push information sent by a smart device, it will determine whether there is target push information already present in a notification bar with the same content as that of push information, and when there is pre-existing target push information in the notification bar, it will update the recorded time of the target push information. There is no need for the smart telephone 100 to generate a prompt such as by ringing and/or vibration, and disturbing the user due to the prompt generated by the smart telephone 100 is avoided.

Additionally, further determination may be made regarding times of reception of repeated push information received by the smart telephone 100 and the level of importance of the push information to determine whether to perform a prompt for the push information. Reference may be made to detailed illustration below which will not be repeated herein.

For detailed illustration to perform the above, a method for information processing is provided in the present disclosure, as shown in Fig. 2, and the method may include the following steps.

In step S210, when push information is received, whether there is target push information already in a notification bar with the same content as that of the received push information is determined.

Based on the above embodiment in Fig. 1, a smart telephone is a kind of mobile terminal which may bind to a plurality of different varieties of smart devices and may receive push information sent by the smart devices. When the mobile terminal receives push information sent by the smart devices, the mobile terminal will acquire the time of receiving the push information. The time of receiving may be a specific instance of time including year, month, day and hour, minute and second, etc., for example.

The target push information refers to information pre-existing in the notification bar. The push information currently received by the terminal may be compared with the target push information to determine whether their respective information content is identical.

In step S220, a push time corresponding to the target push information in the notification bar is updated to the push time of the received push information if there is target push information already in the notification bar.

If in the notification bar there already exists target push information with the same content as that of the push information, it may be indicated that the terminal has received the target push information with the same content before receiving the current received push information, and the user may have received prompt information for the target push information when receiving the previous target push information. To prevent the user from being prompted upon receiving the current received push information, which would affect the user's normal work and life, only the time of receiving the current received push information is updated in the terminal to facilitate the user's view.

The target push information and the received push information may both correspond to the same application program. That is, the target push information and the received push information are both pushed by the same application program of the terminal. For example, when the terminal receives push information pushed by another terminal, the push information may be processed by an application program for which another terminal is responsible and the push information may be pushed to the notification bar of the terminal.

It should be noted that, the above push information refers to push information that is sent by the same smart device binding to the mobile terminal. When different smart devices send push information, although the information content of the push information may be identical, a prompt may still be generated in the mobile terminal to prompt the user to view.

The method for information processing provided in the disclosure avoids the mobile terminal always prompting the user when the same device sends push information with the same information content to the mobile terminal repeatedly within a predetermined period of time, which may affect the user's normal work and life.

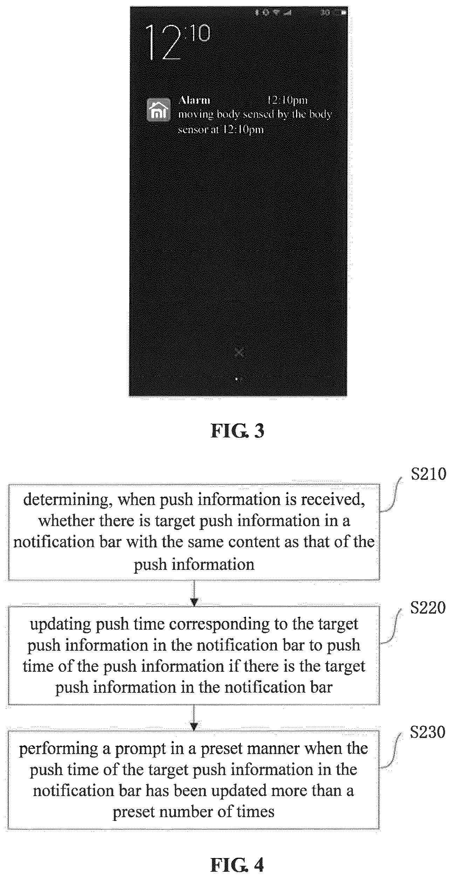

The content in the received push information and the target push information may include one or more of device identification of the smart terminal, information type of the information content of the push information and the time of receiving the push information. Exemplarily, as shown in Fig. 3, the received push information and the target push information may be as follows:
alarm: moving body sensed by the body sensor at 12:10 pm.

In order to more accurately illustrate whether there is a need to prompt for the received push information, as a refinement of the method of Fig. 2, in another exemplary embodiment of the present disclosure, as shown in Fig. 4, the method may further include the following steps.

In step S230, a prompt is performed in a preset manner when the push time of the target push information in the notification bar has been updated more than a preset number of times.

The times of reception may be one time, two times, or more, and the like which can be determined as appropriate. If the number of times of reception are greater than or equal to a preset value, it is possible to indicate that the push information is urgent communication information and it is needed to be processed by the user instantly, thus a prompt for the push information is needed. Furthermore, to avoid the case that the user has not been prompted when the mobile terminal has received the push information and a generated prompt the first time within a preset period of time, a prompt will be performed again when repeated push information is received from the same smart device the second time to avoid missing significant information and causing massive loss for the user.

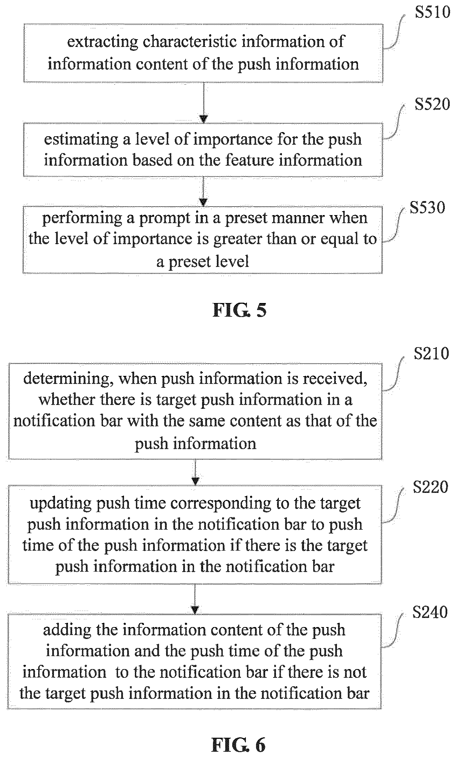

In order to more accurately illustrate whether there is a need to prompt for the received push information, as a refinement of the method of Fig. 2, in yet another exemplary embodiment of the present disclosure, as shown in Fig. 5, the method may further include the following steps.

In step S510, characteristic information of the information content of the push information is extracted.

The characteristic information may be key words of the push information, such as one or more of "alarm", "urgent", "attention" and other sensitive words.

In step S520, a level of importance for the push information is estimated based on the characteristic information.

Exemplarily, if the information content of the push information includes "alarm", "urgent", "attention" and other sensitive words, the push information may be determined to be of higher level of importance. If sensitive words are not included, the push information may be determined to be of lower level of importance.

In step S530, prompting is performed in a preset manner when the level of importance is greater than or equal to a preset level.

If priority of information of the push information is greater than or equal to the preset priority level, it may be indicated that the push information is very important and a timely prompt for the push information is needed, such that the user can take respective actions quickly when viewing the push information based on the prompt and loss is avoided.

As a refinement of the method of Fig. 2, in another exemplary embodiment of the present disclosure, as shown in Fig. 6, the method may further include the following steps.

In step S240, the information content of the received push information and the push time of the received push information is added to the notification bar if there is no target push information already in the notification bar.

This is directed to the case that if the terminal of the user has received the push information previously and the push information is not present in the notification bar after the user has viewed it, or if the terminal receives the push information for the first time and there is no target push information with the same content as that of the received push information already present, the information content of the received push information and corresponding push time then should be added to the notification bar for convenience of view for the user.

The above prompt for the push information may be performed in the following manners.

Preset audio may be played by a speaker of the mobile terminal. For example, rings to which the user is sensitive may be set to be the preset audio to play to prompt the user to view in a timely manner. Alternatively, vibration may be generated by the mobile terminal. Alternatively, a pop-up box may be displayed on the main interface of the mobile terminal. As such, when viewing or using the terminal, the user can acquire the push information in a timely manner.

Two or more of the above manners may be combined to perform the prompting to quickly and effectively prompt the user.

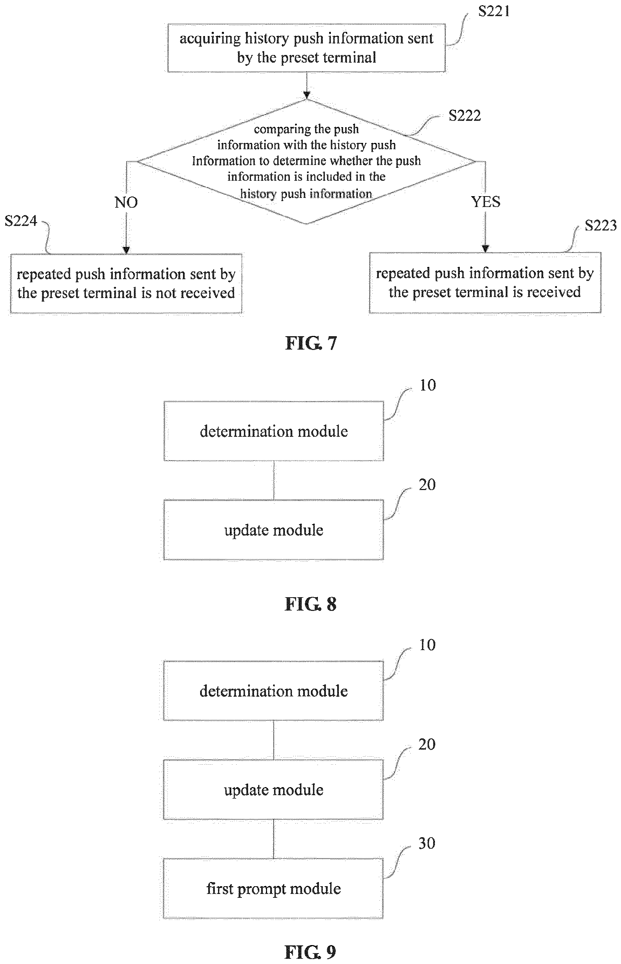

In order to more accurately determine whether the mobile terminal receives the repeated push information sent by a preset terminal, as a refinement of the method of Fig. 2, in another exemplary embodiment of the present disclosure, as shown in Fig. 7, the method may further include the following steps.

In step S221, historic push information sent by the preset terminal is acquired.

In step S222, the received push information is compared with the historic push information to determine whether the received push information is included in the historic push information.

The received push information may be compared with the historic push information either for a complete match or in a semantic manner.

When the received push information is included in the historic push information, in step S223, a determination is made that repeated push information sent by the preset terminal is received.

When the received push information is not included in the historic push information, in step S224, a determination is made that repeated push information sent by the preset terminal is not received.

It should be noted that, the historic push information may refer to all the push information sent by the preset terminal within a preset period of time and received by the mobile terminal. The push information currently received by the mobile terminal is compared with the historic push information, therefore it may be determined whether the push information is included in the historic push information, thus a determination may be made regarding whether the mobile terminal receives repeated push information sent by the preset terminal.

In the method for information processing provided in the disclosure, the current received push information will be compared with the target push information in the notification bar when the mobile terminal receives the push information sent by a bound device or when an application program pushes received information as push information. If there is already target push information with the same content as that of the received push information, the push time corresponding to the target push information in the notification bar is required to be updated to the push time of the received push information for convenience of view for the user, without prompting the user at this point, such that impacts to the user's normal life and work can be avoided.

Furthermore, in the method for information processing provided in the disclosure, further determination may be made regarding whether it is needed to prompt the user with the mobile terminal by determining times of reception of repeated push information and priority of the push information, thus disturbance to the user's work and life can be avoided.

Based on the description of the above method embodiments, those skilled in the art may understand that the disclosure may be implemented with combination of software and necessary general purpose hardware platform or with hardware only, however, the former one is better in many situations. Based on such understanding, the technical solutions in the present disclosure essentially may be embodied in a software product, for example. The computer software product may be stored in a storage media and may include instructions to enable a computer device, such as a personal computer, a server, a network device, and the like, to perform all or parts of steps of the methods in the present disclosure. The storage media may include a read-only memory (ROM), a random-access memory (RAM), a magnetic or optical disk and other medium capable of storing program codes.

As an implementation of the above embodiments, the present disclosure also provides a device for information processing. The device is located in a mobile terminal as shown in Fig. 8, and may include a determination module 10 and an update module 20.

The determination module 10 may be configured to determine, when push information is received, whether there is target push information in a notification bar with the same content as that of the received push information.

The update module 20 is configured to update push time corresponding to the target push information in the notification bar to push time of the push information when the determination module 10 determines that there is the target push information in the notification bar.

Based on the above embodiment in Fig. 1, a smart telephone is a kind of mobile terminal which may bind to a plurality of variety of smart devices and may receive push information sent by the smart devices. When the mobile terminal receives push information sent by the smart device, the mobile terminal will acquire time of receiving the push information. The time of receiving may be a specific instance of time including year, month, day and hour, minute and second, etc. as actual requirement, for example.

The target push information may refer to information preexisted in the notification bar. The push information currently received by the terminal may be compared with the target push information to determine whether respective information content is identical.

If in the notification bar there has been the target push information with the same content as that of the push information, it may be indicated that the terminal has received the target push information with the same content before receiving the push information, and the user may have received prompt information for the target push information when receiving previous target push information. To prevent prompt when the user receives the push information to affect the user's normal work and life, only the time of receiving the push information is updated in the terminal to make it convenient for the user to view.

The target push information and the push information both correspond to the same application program, that is, the target push information and the push information is both pushed by the same application program of the terminal. For example, when the terminal receives push information pushed by another terminal, the push information may be processed by an application program for which another terminal is responsible and the push information may be pushed to the notification bar of the terminal.

In another exemplary embodiment of the present disclosure, based on Fig. 8, as shown in Fig. 9, the device may further include a first prompt module 30 configured to perform prompt in a preset manner when the push time of the target push information in the notification bar has been updated more than a preset number of times.

The times of reception may be one time, two times, and the like which is desired as particular situations. If the times of reception is greater than or equal to a preset value, it is possible to indicate that the push information is more urgent communication information and it is needed to be processed by the user instantly, thus prompt for the push information is needed. Furthermore, to avoid the case that the user has not be prompted when the mobile terminal has received the push information and generated prompt the first time within a preset period of time, prompt will be performed again when repeated push information is received from the same smart device the second time to avoid missing significant information and causing massive loss for the user.

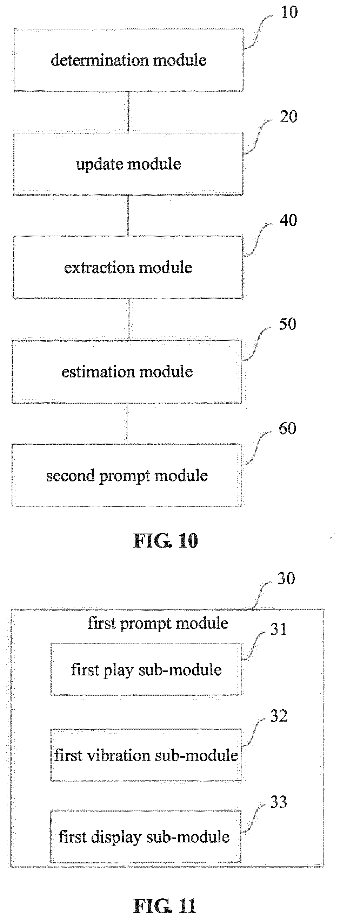

In another exemplary embodiment of the present disclosure, based on Fig. 8, as shown in Fig. 10, the device may further include an extraction module 40, an estimation module 50 and a second prompt module 60.

The extraction module 40 is configured to extract characteristic information of information content of the push information. The characteristic information may be key words of the push information, such as alarm, urgent, attention and other sensitive words.

The estimation module 50 is configured to estimate level of importance for the push information based on the characteristic information extracted by the extraction module 40.

Exemplarily, if the information content of the push information includes "alarm, urgent, attention" and other sensitive words, the push information may be determined to be of higher level of importance. If sensitive words are not included, the push information may be determined to be of lower level of importance.

The second prompt module 60 is configured to perform prompt in a preset manner when the estimation module 50 estimates that the level of importance is greater than or equal to a preset level.

If priority of information of the push information is greater than or equal to the preset priority level, it may be indicated that the push information is very important and timely prompt for the push information is needed, such that the user can take respective actions quickly when viewing the push information based on the prompt and loss is avoided.

In another exemplary embodiment of the present disclosure, based on Fig. 9, as shown in Fig. 11, the first prompt module 30 may include a first play sub-module 31, a first vibration sub-module 32 or a first display sub-module 33. The first play sub-module 31 is configured to play preset audio by a speaker of the mobile terminal. The first vibration sub-module 32 is configured to generate vibration by the mobile terminal. The first display sub-module 33 is configured to display a pop-up box on a main interface.

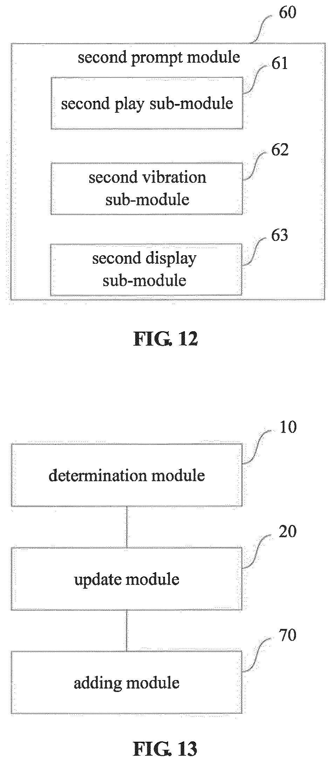

In another exemplary embodiment of the present disclosure, based on Fig. 10, as shown in Fig. 12, the second prompt module 60 may include a second play sub-module 61, a second vibration sub-module 62 or a second display sub-module 63. The second play sub-module 61 is configured to play preset audio by a speaker of the mobile terminal. The second vibration sub-module 62 is configured to generate vibration by the mobile terminal. The second display sub-module 63 is configured to display a pop-up box on a main interface.

In another exemplary embodiment of the present disclosure, based on Fig. 8, as shown in Fig. 13, the device may further include an adding module 70 which is configured to add the information content of the push information and the push time of the push information to the notification bar when there is not the target push information in the notification bar.

This is directed to the case that if the terminal of the user has received the push information previously and the push information is not present in the notification bar after the user has viewed it, or if the terminal receives the push information the first time and there is no the target push information with the same content as that of the push information, the information content of the push information and corresponding push time then is needed to be added to the notification bar for convenience of view for the user. The target push information determined by the determination module 10 and the push information may correspond to the same application program.

In the device for information processing provided in the disclosure, when the mobile terminal receives push information sent by a binding device, the mobile terminal will acquire time of receiving the push information. If the mobile terminal has received push information sent by the device with the same content as that of the push information within a period of time before the time of receiving, the mobile terminal will add display information corresponding to the push information to the notification bar. As a result, it is avoided that the mobile terminal always prompt the user when the same device sends the push information with the information content to the mobile terminal repeatedly within the same period of time, which may affect the user's normal work and life.

In the method and device for information processing provided in the disclosure, further determination is made regarding whether it is needed to prompt the user with the mobile terminal by determining times of reception of repeated push information and priority of the push information, thus disturbance to the user's work and life can be avoided.

Where functional modules are referred to in apparatus embodiments for carrying out various steps of the described method(s) it will be understood that these modules may be implemented in hardware, in software, or a combination of the two. When implemented in hardware, the modules may be implemented as one or more hardware modules, such as one or more application specific integrated circuits. When implemented in software, the modules may be implemented as one or more computer programs that are executed on one or more processors.

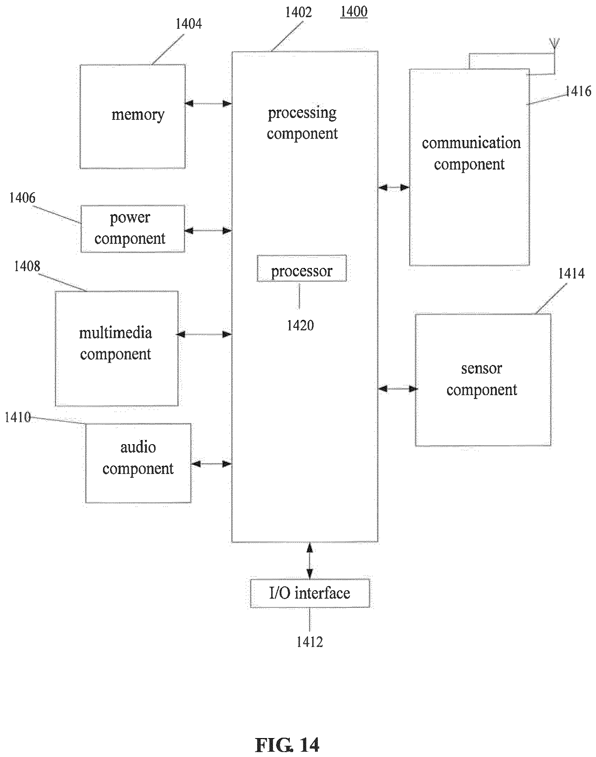

Fig. 14 is a structure diagram of a terminal 1400 for informaiton processing according to an exemplary embodiment. For example, the terminal 1400 may be a mobile phone, a computer, a digital broadcast terminal, a messaging device, a gaming console, a tablet, a medical device, exercise equipment, a personal digital assistant, and the like.

Referring to Fig. 14, the terminal 1400 may include one or more of the following components: a processing component 1402, a memory 1404, a power component 1406, a multimedia component 1408, an audio component 1410, an input/output (I/O) interface 1412, a sensor component 1414, and a communication component 1416.

The processing component 1402 typically controls overall operations of the terminal 1400, such as the operations associated with display, telephone calls, data communications, camera operations, and recording operations. The processing component 1402 may include one or more processors 1420 to execute instructions to perform all or part of the steps in the above described methods. Moreover, the processing component 1402 may include one or more modules which facilitate the interaction between the processing component 1402 and other components. For instance, the processing component 1402 may include a multimedia module to facilitate the interaction between the multimedia component 1408 and the processing component 1402.

The memory 1404 is configured to store various types of data to support the operation of the terminal 1400. Examples of such data include instructions for any applications or methods operated on the terminal 1400, contact data, phonebook data, messages, pictures, video, etc. The memory 1404 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1406 provides power to various components of the terminal 1400. The power component 1406 may include a power management system, one or more power sources, and any other components associated with the generation, management, and distribution of power for the terminal 1400.

The multimedia component 1408 includes a screen providing an output interface between the terminal 1400 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1408 includes a front camera and/or a rear camera. The front camera and the rear camera may receive an external multimedia datum while the terminal 1400 is in an operation mode, such as a photographing mode or a video mode. Each of the front camera and the rear camera may be a fixed optical lens system or have optical focusing and zooming capability.

The audio component 1410 is configured to output and/or input audio signals. For example, the audio component 1410 includes a microphone ("MIC") configured to receive an external audio signal when the terminal 1400 is in an operation mode, such as a call mode, a recording mode, and a voice recognition mode. The received audio signal may be further stored in the memory 1404 or transmitted via the communication component 1416. In some embodiments, the audio component 1410 further includes a speaker to output audio signals.

The I/O interface 1412 provides an interface between the processing component 1402 and peripheral interface modules, the peripheral interface modules being, for example, a keyboard, a click wheel, buttons, and the like. The buttons may include, but are not limited to, a home button, a volume button, a starting button, and a locking button.

The sensor component 1414 includes one or more sensors to provide status assessments of various aspects of the terminal 1400. For instance, the sensor component 1414 may detect an open/closed status of the terminal 1400, relative positioning of components (e.g., the display and the keypad, of the terminal 1400), a change in position of the terminal 1400 or a component of the terminal 1400, a presence or absence of user contact with the terminal 1400, an orientation or an acceleration/deceleration of the terminal 1400, and a change in temperature of the terminal 1400. The sensor component 1414 may include a proximity sensor configured to detect the presence of a nearby object without any physical contact. The sensor component 1414 may also include a light sensor, such as a CMOS or CCD image sensor, for use in imaging applications. In some embodiments, the sensor component 1414 may also include an accelerometer sensor, a gyroscope sensor, a magnetic sensor, a pressure sensor, or a temperature sensor.

The communication component 1416 is configured to facilitate communication, wired or wirelessly, between the terminal 1400 and other devices. The terminal 1400 can access a wireless network based on a communication standard, such as WiFi, 2G, or 3G, or a combination thereof. In an exemplary embodiment, the communication component 1416 receives a broadcast signal or broadcast associated information from an external broadcast management system via a broadcast channel. In an exemplary embodiment, the communication component 1416 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the terminal 1400 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1404, executable by the processor 1420 in the terminal 1400, for performing the above-described methods. For example, the non-transitory computer-readable storage medium may be a ROM, a RAM, a CD-ROM, a magnetic tape, a floppy disc, an optical data storage device, and the like.

A non-transitory computer readable storage medium having stored therein instructions that, when executed by a processor of a mobile terminal, cause the mobile terminal to perform a method for informaiton processing including: determining, when push information is received, whether there is target push information in a notification bar with the same content as that of the push information; and updating push time corresponding to the target push information in the notification bar to push time of the push information if there is the target push information in the notification bar.

It should be understood that the present disclosure may be applied to many general or dedicated purpose computer systerm environments or configurations. For example, personal computer (PC), server computer, handheld device or portable device, tablet device, microprocessor-based system, set top box, programmable consume eletronics, network PC, small-size computer, mainframe computer, distributed computing environment including any of the above systems or devices, and the like.

The disclosure may be described in general context of computer-executable instructions executed by a computer, for example, a program module. Generally, the program module may include routine, program, object, component, data structure and the like that performs particular tasks or implements particular abstract data type. The disclosure may be implemented in distributed computing environment where tasks are performed by a remote device connected via a communication network. In the distributed computing environment, the program module may be located in local or remote computer storage media including a storage device.

It should be noted that the relationship terms such as "the first" and "the second" are intended to separate an entity or operation from another in the present application, and not necessarily to require or imply that there is any actual relationship or order among these entities or operations. It is intended that terms "include", "comprise" and other variations thereof are non-exclusive, such that a procedure, method, item or device including a series of elements not only include these elements, but also other elements that have not been listed, or all fixed elements of the procedure, method, item or device are included. Without more limitation, the elements defined by "comprise a/an" will not exclude other elements existed in the procedure, method, item or device including the elements.

Other embodiments of the invention will be apparent to those skilled in the art from consideration of the specification and practice of the disclosures herein. This application is intended to cover any variations, uses, or adaptations of the disclosure following the general principles thereof and including such departures from the present disclosure as come within known or customary practice in the art. It is intended that the specification and examples be considered as exemplary only, with a true scope of the invention being indicated by the following claims.

It will be appreciated that the inventive concept is not limited to the exact construction that has been described above and illustrated in the accompanying drawings, and that various modifications and changes can be made without departing from the scope thereof. It is intended that the scope of the invention only be limited by the appended claims.

## Claims

1. A method for information processing in a terminal having a screen operable to display a notification bar, **characterized in** comprising:
determining (S210), when first push information is received, whether previously received second push information having the same content as that of the first push information has been in the notification bar of the terminal;
updating (S220) a push time corresponding to the second push information in the notification bar to the push time of the first push information in response to determining that the second push information has been in the notification bar; and
**characterized in that** the method further comprises:
performing (S230) a prompt in a preset manner, only in response to either of:
the push time of the second push information in the notification bar has been updated more than a preset number of times; and
characteristic information extracted out of the content of the first push information indicates that a level of importance for the first push information is greater than or equal to a preset level,
wherein performing the prompt in the preset manner comprises at least one of:
playing a preset audio by a speaker of the terminal;
generating a vibration by the terminal; and
displaying a pop-up box on a main interface.

2. The method of claim 1, wherein the method further comprises:
adding (S240) the content of the first push information and the push time of the first push information to the notification bar in response to determining that the second push information has not been in the notification bar.

3. The method of any preceding claim, wherein the second push information and the first push information correspond to a same application program.

4. A terminal, **characterized in** comprising:
a processor (1420); and
a memory (1404) for storing processor-executable instructions adapted to perform the method of any of claims 1 to 3; wherein the processor is configured to perform the stored instructions

5. A computer program comprising computer executable instructions that when executed cause a computer to carry out the method of any of claims 1 to 3.

6. A non-transitory computer readable storage medium, **characterized in** having stored computer executable instructions that when executed cause a computer to carry out the method of any of claims 1 to 3.

## Patentansprüche

1. Verfahren zur Informationsverarbeitung in einem Endgerät, das einen Bildschirm aufweist, der betriebsfähig ist, eine Benachrichtigungsleiste anzuzeigen, **dadurch gekennzeichnet, dass** es Folgendes umfasst:
Bestimmen (S210), wenn erste Push-Informationen empfangen werden, ob zuvor empfangene zweite Push-Informationen, die denselben Inhalt aufweisen wie die ersten Push-Informationen, in der Benachrichtigungsleiste des Endgeräts gewesen sind;
Aktualisieren (S220) eines Push-Zeitpunkts, der den zweiten Push-Informationen in der Benachrichtigungsleiste entspricht, auf den Push-Zeitpunkt der ersten Push-Informationen in Reaktion auf das Bestimmen, dass die zweiten Push-Informationen in der Benachrichtigungsleiste gewesen sind; und
**dadurch gekennzeichnet, dass** das Verfahren ferner Folgendes umfasst:
Durchführen (S230) einer Aufforderung in einer voreingestellten Weise, nur in Reaktion auf eines aus Folgendem:
der Push-Zeitpunkt der zweiten Push-Informationen in der Benachrichtigungsleiste wurde mehr als eine voreingestellte Anzahl von Malen aktualisiert; und
charakteristische Informationen, die aus dem Inhalt der ersten Push-Informationen extrahiert wurden, zeigen an, dass eine Wichtigkeitsstufe für die ersten Push-Informationen größer oder
gleich einer voreingestellten Stufe ist,
wobei das Durchführen der Aufforderung in der voreingestellten Weise mindestens eins aus Folgendem umfasst:
Abspielen eines voreingestellten Tons durch einen Lautsprecher des Endgeräts;
Erzeugen einer Vibration durch das Endgerät; und
Anzeigen eines Pop-up-Felds an einer Hauptschnittstelle.

2. Verfahren nach Anspruch 1, wobei das Verfahren ferner Folgendes umfasst:
Hinzufügen (S240) des Inhalts der ersten Push-Informationen und des Push-Zeitpunkts der ersten Push-Informationen zur Benachrichtigungsleiste in Reaktion auf das Bestimmen, dass die zweiten Push-Informationen nicht in der Benachrichtigungsleiste gewesen sind.

3. Verfahren nach einem vorhergehenden Anspruch, wobei die zweiten Push-Informationen und die ersten Push-Informationen demselben Anwendungsprogramm entsprechen.

4. Endgerät, **dadurch gekennzeichnet, dass** es Folgendes umfasst:
einen Prozessor (1420); und
einen Speicher (1404) zum Speichern von prozessorausführbaren Befehlen, die dazu angepasst sind, das Verfahren nach einem der Ansprüche 1 bis 3 durchzuführen;
wobei der Prozessor dazu ausgelegt ist, die gespeicherten Befehle auszuführen.

5. Computerprogramm, umfassend computerausführbare Befehle, die, wenn ausgeführt, einen Computer dazu veranlassen, das Verfahren nach einem der Ansprüche 1 bis 3 durchzuführen.

6. Nicht-flüchtiges computerlesbares Speichermedium, **dadurch gekennzeichnet, dass** es computerausführbare Befehle gespeichert hat, die, wenn ausgeführt, einen Computer dazu veranlassen, das Verfahren nach einem der Ansprüche 1 bis 3 durchzuführen.

## Revendications

1. Procédé de traitement d'informations dans un terminal ayant un écran opérationnel pour afficher une barre de notification, **caractérisé en ce qu'**il comprend :
le fait de déterminer (S210), lorsque des premières informations de pousser sont reçues, si des secondes informations de pousser précédemment reçues ayant le même contenu que celui des premières informations de pousser ont été dans la barre de notification du terminal ;
la mise à jour (S220) d'un temps de pousser correspondant aux secondes informations de pousser dans la barre de notification au temps de pousser des premières informations de pousser en réponse à la détermination que les secondes informations de pousser ont été dans la barre de notification ; et
**caractérisé en ce que** le procédé comprend en outre :
la réalisation (S230) d'une invite de manière préétablie, uniquement en réponse à l'un ou l'autre parmi :
le temps de pousser des secondes informations de pousser dans la barre de notification a été mis à jour plus d'un nombre de fois préétabli ; et
des informations caractéristiques extraites du contenu des premières informations de pousser indiquent qu'un niveau d'importance pour les premières informations de pousser est supérieur ou égal à un niveau préétabli,
dans lequel la réalisation de l'invite de manière préétablie comprend au moins l'un parmi :
la lecture d'un audio préétabli par un haut-parleur du terminal ;
la génération d'une vibration par le terminal ; et
l'affichage d'une fenêtre d'aide contextuelle sur une interface principale.

2. Procédé selon la revendication 1, dans lequel le procédé comprend en outre :
l'ajout (S240) du contenu des premières informations de pousser et du temps de pousser des premières informations de pousser à la barre de notification en réponse à la détermination que les secondes informations de pousser n'ont pas été dans la barre de notification.

3. Procédé selon l'une quelconque des revendications précédentes, dans lequel les secondes informations de pousser et les premières informations de pousser correspondent à un même programme d'application.

4. Terminal, **caractérisé en ce qu'**il comprend :
un processeur (1420) ; et
une mémoire (1404) pour stocker des instructions exécutables par processeur adaptées pour réaliser le procédé de l'une quelconque des revendications 1 à 3 ;
dans lequel le processeur est configuré pour réaliser les instructions stockées.

5. Programme d'ordinateur comprenant des instructions exécutables par ordinateur qui, lorsqu'elles sont exécutées, amènent un ordinateur à réaliser le procédé de l'une quelconque des revendications 1 à 3.

6. Support de stockage lisible par ordinateur non transitoire, **caractérisé en ce qu'**il comporte des instructions exécutables par ordinateur stockées qui, lorsqu'elles sont exécutées, amènent un ordinateur à réaliser le procédé de l'une quelconque des revendications 1 à 3.
